# EUROPÄISCHE PATENTSCHRIFT

(11) **EP 1 463 637 B1**
(45) Veröffentlichungstag und Bekanntmachung des Hinweises auf die Patenterteilung: **02.07.2008**
(21) Anmeldenummer: 02806021.8
(22) Anmeldetag: 18.12.2002
(51) Int. Cl.: B42D 15/00

(54) **WERT- ODER SICHERHEITSDOKUMENT MIT EINEM SCHALTER**
VALUABLE DOCUMENT OR SECURITY DOCUMENT COMPRISING A SWITCH
DOCUMENT DE VALEUR OU DE SECURITE PRESENTANT UN COMMUTATEUR

(30) Priorität: 10.01.2002 DE 20200358 U; 30.03.2002 DE 10214370
(43) Veröffentlichungstag der Anmeldung: 06.10.2004
(73) Patentinhaber: Bundesdruckerei GmbH, 10969 Berlin (DE)
(72) Erfinder: SAUTER, Dieter, 72766 Reutlingen (DE); BAILLEU, Anett, 13127 Berlin (DE); PÖTSCHKE, Konstantin, 10179 Berlin (DE); MUTH, Oliver, 12277 Berlin (DE); GRAMMLICH, Daniel, 72124 Pliezhausen (DE); PAESCHKE, Manfred, 16352 Basdorf (DE); FRANZ-BURGHOLZ, Arnim, 14612 Falkensee (DE); AHLERS, Benedikt, 10997 Berlin (DE)
(74) Vertreter: KEIL & SCHAAFHAUSEN Patentanwälte
(86) Internationale Anmeldenummer: PCT/EP2002/014441
(87) Internationale Veröffentlichungsnummer: WO 2003/057500

(56) Entgegenhaltungen:
- EP-A- 1 134 694
- EP-A- 1 147 912
- EP-A- 1 148 440
- WO-A-00/07151

## Beschreibung

Die Erfindung betrifft ein Wert- oder Sicherheitsdokument sowie ein Verfahren zur Herstellung eines Wert- oder Sicherheitsdokuments.

Aus dem Stand der Technik ist es bekannt, Wert- oder Sicherheitsdokumente, wie zum Beispiel Banknoten, Personalausweise, Führerscheine, Briefmarken, Eintrittskarten, Wertmarken, Kreditkarten, Scheckkarten, Aktien, Verpackungen und dergleichen, mit Sicherheitsmerkmalen zu versehen, die die Fälschung oder unautorisierte Modifikation solcher Dokumente erschweren oder gar unmöglich machen. Als "Dokument" wird in diesem Sinne im weiteren auch ein Produkt bezeichnet, welches mit einem entsprechenden Sicherheitsmerkmal versehen ist.

Zu den bekannten Sicherheitsmerkmalen gehören Wasserzeichen. Solche Wasserzeichen werden im Gegenlicht sichtbar und zeigen dann ein bestimmtes Motiv oder eine Wertzahl, wie zum Beispiel den Nennwert der betreffenden Banknote.

Ein weiteres Sicherheitsmerkmal ist der Sicherheitsfaden. Die Sicherheitsüberprüfung findet hierbei so statt, dass im Gegenlicht eine dunklere Linie sichtbar werden muss.

Des Weiteren ist es bekannt, Spezial-Folienstreifen mit Sicherheitsmerkmalen, wie zum Beispiel Hologrammen aufzubringen. Die Hologramme ermöglichen beispielsweise, dass beim Kippen einer Banknote, je nach dem Betrachtungswinkel, unterschiedliche Symbole oder Zahlen erscheinen.

Ferner ist zur Realisierung von Sicherheitsmerkmalen die Verwendung von Perlglanzstreifen bekannt. Beim Kippen der Banknote wird hierbei ein zum Beispiel goldfarbener Streifen sichtbar, in dem ein Symbol und die jeweilige Wertzahl zu erkennen sind. Ein solcher Perlglanzstreifen ist zum Beispiel auf dem 20 EURO Schein vorhanden.

In JP 2001236479 A wird die kostengünstige Herstellung einer kontaktlosen IC-Karte beschrieben, bei der in einem einmaligen Vorgang das Ende einer Antenne auf einem flexiblen Substrat 50 herausgeschnitten und gefaltet wird, dass es mit dem Schaltkreis am anderen Ende der Antenne verbunden werden kann.

Aus der US 5,403,039 ist ein gedrucktes Dokument wie z. B. ein Lotterieschein, bekannt, der eine thermochromische Schicht aufweist. Die thermochromische Schicht wird über auf das Dokument gedruckte Daten aufgebracht. Zur Authentifizierung wird die thermochromische Schicht erwärmt, indem sie beispielsweise mit dem Finger berührt wird. Wenn das Dokument echt ist, kommt es daraufhin zu einer reversiblen Farbänderung.

Aus der US 5,826,915 ist ein Sicherheitsdokument mit aufgedrucktem thermochromischen Material bekannt. Durch Reiben wird das thermochromische Material erwärmt und zeigt dann ein entsprechendes Sicherheitsmerkmal.

Bei den genannten, aus dem Stand der Technik bekannten, Sicherheitsmerkmalen handelt es sich um sogenannte "Public Features", das heißt, um solche Sicherheitsmerkmale, die für Jedermann ohne die Zuhilfenahme von speziellen Geräten überprüfbar sind und ohne das besondere Kenntnisse erforderliche sind.

Der Erfindung liegt die Aufgabe zugrunde, ein verbessertes Wert- oder Sicherheitsdokument und ein verbessertes Verfahren zur Herstellung eines Wert- oder Sicherheitsdokuments zu schaffen.

Die der Erfindung zugrunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Die Erfindung erlaubt es, ein Wert- oder Sicherheitsdokument mit einem Schalter herzustellen. Der Schalter wird vorzugsweise so realisiert, dass zumindest eine der Leiterbahnen einer elektrischen oder elektronischen Schaltung, die auf das Wert- oder Sicherheitsdokument aufgebracht ist, unterbrochen ist. Durch Überbrückung dieser Unterbrechung ist das durch die Schaltung zur Verfügung gestellte Sicherheitsmerkmal aktivierbar.

Nach einer bevorzugten Ausführungsform der Erfindung erfolgt die Überbrükkung der Unterbrechung durch ein auf dem Wert- oder Sicherheitsdokument selbst befindliches leitfähiges Element. Hierzu weist das Wert- oder Sicherheitsdokument einen formbaren Träger auf. Das leitfähige Element ist auf dem Wert- oder Sicherheitsdokument so angeordnet, dass durch entsprechende Formung des Dokuments, das heißt, etwa durch Knicken, Falten oder Biegen, das leitfähige Element über die Unterbrechung bringbar ist, um diese elektrisch zu schließen. Dadurch wird eine auf dem Wert- oder Sicherheitsdokument befindliche Schaltung geschlossen, um ein Sicherheitsmerkmal zu aktivieren.

Nach einer weiteren bevorzugten Ausführungsform der Erfindung ist die Unterbrechung zum Schließen mittels eines externen leitfähigen Elements ausgebildet. Die Größe der Unterbrechung wird dabei vorzugsweise so gewählt, dass eine Überbrückung mit einer Münze erfolgen kann.

Nach einer weiteren bevorzugten Ausführungsform der Erfindung befindet sich auf dem Wert- oder Sicherheitsdokument eine Energiequelle. Hierbei kann es sich z. B. um eine Batterie, eine Solarzelle oder um eine Antenne handeln. Die Energiequelle dient zur Versorgung eines Wandlers des Wert- oder Sicherheitsdokuments, welcher das Sicherheitsmerkmal realisiert. Der Wandler kann dabei zur Abgabe eines optischen, akustischen und/oder elektromagnetischen Signals ausgebildet sein.

Nach einer weiteren bevorzugten Ausführungsform der Erfindung weist das Wert- oder Sicherheitsdokument eine Papier- oder Kunststoffschicht als Träger auf. Dies ist insbesondere für die leichte Formbarkeit des Dokuments vorteilhaft, um mittels eines auf dem Dokument befindlichen leitfähigen Elements die Unterbrechung zu schließen.

Nach einer weiteren bevorzugten Ausführungsform der Erfindung sind ein, mehrere oder alle Elemente der Schaltung, insbesondere das leitfähige Element zur Schließung der Unterbrechung, mittels eines Druckverfahrens auf das Wert- oder Sicherheitsdokument aufgedruckt. Als Druckverfahren eignen sich hierfür insbesondere Tintenstrahldruckverfahren, Siebdruck, Hochdruck, Tiefdruck und Flachdruck. Geeignete elektrisch leitfähige Druckfarben sind als solche aus dem Stand der Technik bekannt (vgl. Hans Hofstraat "Will Polymer Electronics Change the Electronics Industry?", Polytronic 2001, Conference Proceedings).

Auch die Herstellung von Solarzellen auf dünnen Folien ist an sich aus dem Stand der Technik bekannt (vgl. "Plastic Solar Cells", Adv. Funct. Mater. 2001, 11, No. 1, February, Seite 15 bis 26).

Von besonderem Vorteil ist dabei, dass mittels einer aktiven oder passiven Energiequelle auf dem Wert- oder Sicherheitsdokument ein System realisierbar ist, welches einen integralen Bestandteil des Wert- oder Sicherheitsdokuments bildet. Dies ist insbesondere dann der Fall, wenn die entsprechende Schaltung, zumindest teilweise, drucktechnisch auf eine Trägerschicht des Wert- oder Sicherheitsdokuments aufgebracht ist. Dies ermöglicht ferner eine bequeme Handhabung des Wert- oder Sicherheitsdokuments, insbesondere bei Anwendung für Banknoten und andere Dokumente, die üblicherweise geknickt, gebogen oder gefaltet werden.

Ferner ist hierdurch auch eine besondere Sicherheit vor Fälschungen gegeben, da sich eine drucktechnisch auf das Wert- oder Sicherheitsdokument aufgebrachte Schaltung nicht oder nur sehr schwer kopieren oder modifizieren lässt.

Nach einer weiteren bevorzugten Ausführungsform der Erfindung werden auf das Wert- oder Sicherheitsdokument zumindest zwei Schaltungsstrukturen aufgedruckt, die voneinander durch eine Unterbrechung getrennt sind. Durch Formung des Dokuments können die beiden Schaltungsstrukturen so übereinander gebracht werden, dass diese kontaktieren und ein funktionelles elektrisches oder elektronisches Bauelement ausbilden.

Auf diese Art und Weise kann beispielsweise eine Spule auf dem Wert- oder Sicherheitsdokument realisiert werden. Hierzu werden zwei Spulenwindungshälften getrennt voneinander auf das Dokument aufgedruckt. Die Spulenwindungshälften sind durch eine Knick-, Biege- oder Faltlinie voneinander getrennt. Dadurch ist das Dokument so formbar, dass sich die beiden Spulenwindungshälften übereinander bringen lassen, so dass hierdurch eine Spule entsteht und gleichzeitig das betreffende Sicherheitsmerkmal aktiviert wird. Im Fall einer Spule besteht dieses Sicherheitsmerkmal beispielsweise aus einem von der Spule erzeugten magnetischen Feld, welches z. B. mittels eines Hall-Sensors überprüft werden kann.

Alternativ wird eine Spule dadurch realisiert, dass einzelne Leiterbahnen schräg gegeneinander versetzt auf das Dokument aufgedruckt werden. Durch Falten des Dokuments kontaktiert dann jede der Leiterbahnen mit dem Ende einer schräg gegenüberliegenden Leiterbahn. Auf diese Art und Weise wird jede der Leiterbahnen zu einer Windung der so entstehenden Spule.

Im Weiteren werden bevorzugte Ausführungsbeispiele der Erfindung mit Bezugnahme auf die Zeichnungen näher erläutert. Es zeigen:
- Figur 1: ein Blockdiagramm einer ersten Ausführungsform eines erfindungsgemäßen Wert- oder Sicherheitsdokuments mit einer Faltlinie zum Schließen eines auf dem Dokument befindlichen Stromkreises,
- Figur 2: eine zweite Ausführungsform eines erfindungsgemäßen Wert- oder Sicherheitsdokuments mit einer Schaltung, die eine Unterbrechung aufweist, welche durch eine Münze überbrückbar ist,
- Figur 3: eine weitere Ausführungsform eines erfindungsgemäßen Dokuments mit einem elektrolumineszierenden Sicherheitsmerkmal,
- Figur 4: eine weitere Ausführungsform eines erfindungsgemäßen Wert- oder Sicherheitsdokuments mit einem elektrochromen Sicherheitsmerkmal,
- Figur 5: eine Darstellung der Herstellung und Funktionsweise einer durch Schalten auf einem Wert- oder Sicherheitsdokument realisierbaren Spule.

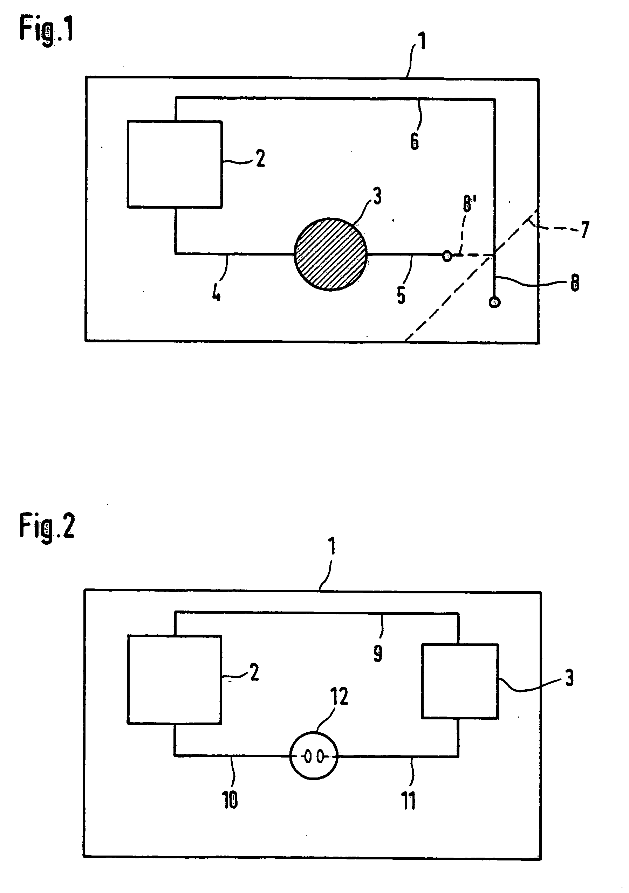

Die Figur 1 zeigt ein Wert- oder Sicherheitsdokument 1 mit einer Energiequelle 2 und einem Wandler 3.

Die Energiequelle 2 ist mit einem Anschluss des Wandlers 3 über ein Leitungselement 4 verbunden. Der andere Anschluss des Wandlers 3 ist mit einem Leitungselement 5 verbunden. Die Energiequelle 2 ist ferner mit einem Leitungselement 6 verbunden.

Das Dokument 1 hat eine Trägerschicht, die beispielsweise aus Papier und/oder einer Kunststoff-Folie besteht. Diese Trägerschicht hat eine Faltlinie 7, die unterhalb des Leitungselements 6 verläuft. Dadurch ist ein Endabschnitt 8 des Leitungselements 6 definiert.

Die Energiequelle 2 kann als aktive oder passive Energiequelle ausgebildet sein, das heißt, beispielsweise als Batterie, Solarzelle oder als Antenne. Die Energiequelle 2 dient zur Lieferung von elektrischer Energie an den Wandler 3. Der Wandler 3 dient zur Umwandlung der elektrischen Energie in eine andere Energieform, wie z. B. Licht, eine akustische Schallwelle, eine elektromagnetische Welle oder ein elektrisches oder magnetisches Feld.

Bei dem Wandler 3 kann es sich um eine Leuchtdiode handeln, vorzugsweise um eine organische Leuchtdiode. Die Herstellung von druckbaren, organischen Leuchtdioden, sogenannten OLEDs, ist an sich bekannt aus "OLED Matrix Displays: Technology and Fundamentals", Polytronic 2001, Conference Procedings, Oktober 21- 24, 2001.

Ferner kann es sich bei dem Wandler 3 um einen sogenannten Faltlautsprecher handeln. Die Herstellung eines Faltlautsprechers ist an sich aus dem Stand der Technik bekannt (http://www.heise.de, Meldung vom 27. April 2001 " Faltlautsprecher für die Hosentasche").

Der Wandler 3 kann ferner eine Spule zur Erzeugung eines magnetischen Feldes aufweisen, welches mittels einer Hall-Sonde nachweisbar ist. Im Prinzip können jedoch beliebige physikalische und/oder chemische Vorgänge für die Wandlung der von der Energiequelle 2 gelieferten elektrischen Energie in eine andere, von außen nachweisbare, Energieform verwendet werden.

Durch den Wandler 3 wird also ein Sicherheitsmerkmal auf dem Dokument 1 realisiert, beispielsweise durch Aufblinken einer LED, durch Abgabe eines akustischen Signals oder durch Erzeugung eines magnetischen Feldes.

Im Grundzustand ist der elektrische Schaltkreis des Dokuments 1 bestehend aus der Energiequelle 2, dem Wandler 3 sowie den Leitungselementen 4, 5 und 6 geöffnet, so dass der Wandler keine elektrische Energie erhält und somit deaktiviert ist. Zur Überprüfung des Sicherheitsmerkmals ist also ein Schließen dieses Stromkreises erforderlich.

Dies erfolgt erfindungsgemäß so, dass das Dokument 1 entlang der Faltlinie 7 zusammengefaltet wird, so dass der Endabschnitt 8 in die mit 8' bezeichnete Position gelangt und das Leitungselement 5 kontaktiert. Auf diese Art und Weise wird also der Stromkreis geschlossen und der Wandler 3 aktiviert. Daraufhin kann eine Überprüfung des Sicherheitsmerkmals stattfinden.

Vorzugsweise sind zumindest die Leitungselemente 4, 5 und 6 auf das Dokument 1 mittels leitfähiger Druckfarbe aufgedruckt. Die Energiequelle 2 und/oder der Wandler 3 können beispielsweise auf einer dünnen Folie hergestellt werden, die auf das Dokument 1 appliziert wird. Alternativ können auch die Energiequelle 2 und/oder der Wandler 3 drucktechnisch mittels verschiedener Druckfarben in ein oder mehreren Druckgängen realisiert werden.

Zur Herstellung des Kontakts der Enden der beiden Leitungselemente 5 und 8 sind die Enden der Leitungselemente 5 und 8, die den Kontakt herstellen sollen, an die Oberfläche des Dokuments 1 geführt, so daß sie freiliegen. In einem bevorzugten Ausführungsbeispiel sind mindestens Teilbereiche der übrigen Schaltungselemente (der Wandler 3, die Leitungselemente 4 und 6, die Energiequelle 2 und die Bereiche der Leitungselemente 5 und 8, die nicht die kontaktherstellenden Enden umfassen) mittels einer nicht dargestellten Schutzschicht bedeckt. Diese Schutzschicht ist in einem im Bereich des Wandlers 3 transparent ausgeführt, so daß beispielsweise eine Emission elektromagnetischer Strahlung durch die Schutzschicht hindurch sichtbar oder detektierbar ist. Die Schutzschicht ist in einem anderen Ausführungsbeispiel im Bereich der Energiequelle 2, insbesondere dann, wenn es sich bei der Energiequelle um eine Solarzelle handelt, transparent ausgebildet. Die Schutzschicht ist vorzugsweise als eine Kunststoffschicht ausgebildet. In den Bereichen, in denen die kontaktherstellenden Enden der Leitungselemente 5 und 8 angeordnet sind, weist die Schutzschicht Öffnungen auf, die ermöglichen, daß diese Enden freiliegen. In einem weiteren Ausführungsbeispiel kann die Schutzschicht auch als gedruckte Schicht ausgebildet sein. In vorteilhafter Weise ist die Schutzschicht als isolierende Schutzschicht ausgebildet. Die Schutzschicht kann sich in einem weiteren Ausführungsbeispiel auch aus mehreren Schichten zusammensetzen. Die Schutzschicht wird in einem bevorzugten Ausführungsbeispiel nach dem Aufbringen der Schaltung aufgedruckt oder auflaminiert.

Die Figur 2 zeigt eine alternative Ausführungsform des Dokuments 1. In dieser Ausführungsform sind die Energiequelle 2 und der Wandler 3 mittels eines Leitungselements 9 miteinander verbunden. Die Energiequelle 2 ist ferner mit einem Leitungselement 10 und der Wandler 3 mit einem Leitungselement 11 verbunden. Die Leitungselemente 10 und 11 kontaktieren sich nicht, sondern sind voneinander beabstandet, so dass die Schaltung des Dokuments 1, bestehend aus Energiequelle 2, Wandler 3 und den Leitungselementen 9, 10 und 11 eine Unterbrechung aufweist. Der Wandler 3 wird daher nicht mit elektrischer Energie versorgt und ist deshalb deaktiviert.

Zur Überprüfung des Sicherheitsmerkmals wird die Unterbrechung zwischen den Leitungselementen 10 und 11 beispielsweise mittels einer Münze 12 überbrückt. Dazu ist der Abstand zwischen den Leitungselementen 10 und 11 so dimensioniert, dass ein Benutzer bequem die Münze 12 zum Schließen des elektrischen Stromkreises über die Unterbrechung halten kann. Die unter der Münze 12 liegenden Enden der Leitungselemente 10 und 11 sind zur besseren Veranschaulichung gestrichelt gezeichnet.

Analog zu dem anhand von Figur 1 erläuterten Ausführungsbeispiel ist in einem bevorzugten Ausführungsbeispiel eine nicht dargestellte Schutzschicht vorgesehen, die die Elemente des Stromkreises bis auf die kontaktherstellenden Enden der Leitungselemente 10 und 11 mindestens teilweise bedeckt und vor Umwelteinflüssen schützt. Diese Enden der Leitungelemente 10 und 11 liegen also frei. In den Bereichen der kontaktherstellenden Enden der Leitungselemente 10 und 11 weist die Schutzschicht demnach Öffnungen auf. Analog zu der oben angegebenen Schutzschicht kann diese Schutzschicht als Kunststoffschicht oder gedruckte Schicht ausgebildet sein, die vorzugsweise isolierend ist. In einem weiteren Ausführungsbeispiel kann die Schutzschicht auch bereichsweise transparent ausgebildet sein. Ein weiterer Vorteil der Schutzschicht besteht darin, dass ein unbeabsichtigter Kontakt zwischen Schaltungselementen, die nicht zur Kontaktherstellung vorgesehen sind, verhindert wird und so Kurzschlüsse vermieden werden.

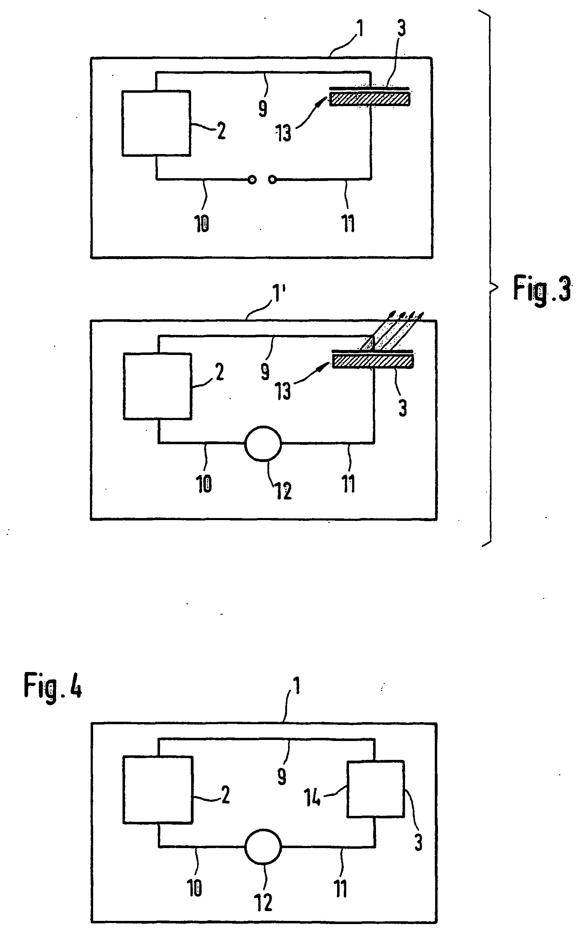

Die Figur 3 zeigt eine weitere Ausführungsform des Dokuments 1 mit einem elektrolumineszierenden Sicherheitsmerkmal. Zur Realisierung dieses Sicherheitsmerkmals befindet sich in dem Wandler 3 eine elektrolumineszierende Schicht 13. Die elektrolumineszierende Schicht kann beispielsweise drucktechnisch durch Verwendung einer Druckfarbe mit elektrolumineszierenden Pigmenten aufgebracht werden.

Die Anordnung der Leitungselemente 9, 10 und 11 auf dem Dokument 1 ist äquivalent zu der Anordnung in der Figur 2.

In dem mit 1' bezeichneten Zustand des Dokuments 1 wird die Unterbrechung zwischen den Leitungselementen 10 und 11 wiederum mit einer Münze überbrückt, so dass der Stromkreis geschlossen wird. Über der elektrolumineszierenden Schicht 13 liegt dann eine Spannung an und erzeugt ein elektrisches Feld, so dass die elektrolumineszierenden Pigmente in der Schicht 13 zum Leuchten angeregt werden. Durch Überbrückung der zwischen den Leitungselementen 10 und 11 bestehenden Unterbrechung mittels einer Münze oder dergleichen kann also eine Überprüfung der Echtheit des Dokuments 1 erfolgen.

Die Figur 4 zeigt eine weitere Ausführungsform des Dokuments 1. In dieser Ausführungsform beinhaltet der Wandler 3 eine Schicht 14, die eine elektrochrome Farbe beinhaltet. Die Schicht 14 ändert also ihre Farbe, sobald ein elektrischer Strom fließt. Die Schicht 14 lässt sich drucktechnisch durch Verwendung einer Druckfarbe mit elektrochromen Eigenschaften aufbringen.

Wird die Unterbrechung zwischen den Leitungselementen 10 und 11 durch eine Münze 12 überbrückt, so kann ein elektrischer Strom fließen, so dass die Farbe der Schicht 14 umschlägt. Über diesen Farbumschlag kann also auf die Echtheit des Dokuments 1 geschlossen werden.

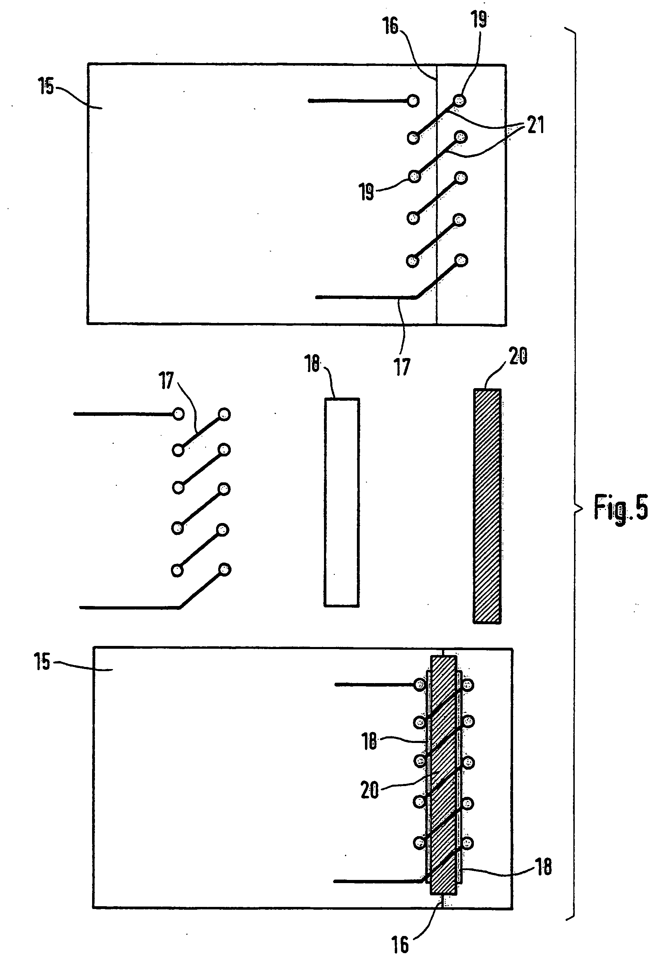

Die Figur 5 zeigt ein Wert- oder Sicherheitsdokument 15, auf dem eine Spule realisiert ist. Die weiteren Elemente der Schaltung des Dokuments 15 sind der Übersichtlichkeit halber in der Figur 5 nicht dargestellt. Die Spule kann in der Schaltung des Dokuments 15 verschiedene Funktionen erfüllen. Beispielsweise kann die Spule Teil eines Schwingkreises sein oder zur Erzeugung eines magnetischen Feldes dienen.

Das Dokument 15 hat eine Faltlinie 16 oder einen Faltbereich 16 entlang derer das Dokument 15 vorzugsweise geschwächt ist, um ein leichtes Falten, Biegen, Rollen oder Knicken zu ermöglichen. Durch die Faltlinie 16 ist gleichzeitig die Längsachse der Spule definiert.

Die Spule besteht aus einer "abgewickelten" Spulenwindung 17, die über die Faltlinie 16 auf das Dokument 15 mittels elektrisch leitfähiger Druckfarbe aufgedruckt wird. Die Spulenwindung 17 besteht aus einzelnen Leiterbahnen 21, die elektrisch voneinander getrennt und parallel zueinander schräg entland der Faltlinie 16 angeordnet sind, so dass sich Endbereiche 19 der Leiterbahnen paarweise mit Bezug auf die Faltlinie 16 gegenüberliegen.

Über die Spulenwindung 17, wird dann eine elektrisch isolierende Schicht 18 mittels elektrisch isolierender Druckfarbe gedruckt. Diese Schicht 18 überdeckt die Spulenwindung 17 entlang der Faltlinie 16, lässt jedoch die Endbereiche 19 der Leiter der Spulenwindungshälfte 17 frei.

Vorzugsweise wird ferner eine Schicht 20 von Druckfarbe mit magnetischen Partikeln auf die Schicht 18 aufgedruckt. Vorzugsweise handelt es sich bei den magnetischen Partikeln um hochpermeable Partikel. Die Schicht 18 dient dazu, die Schicht 20 von den darunter liegenden Leiterbahnen der Spulenwindungshälfte 17 elektrisch zu isolieren.

In dem in der Figur 5 gezeigten Zustand ist die Spule nicht funktionsfähig, da die einzelnen Leiterbahnen der Spulenwindung 17 nicht miteinander kontaktieren. Wenn das Dokument 15 jedoch entlang der Faltlinie 16 gefaltet oder gebogen wird, so kontaktieren gegenüberliegende Leiterbahnen der Spulenwindungshälfte 17 paarweise miteinander, so dass eine spulenförmige, die Schicht 20 umschließende, geschlossene Leitung entsteht. Dadurch wird einerseits der Stromkreis des Dokuments 15 geschlossen und gleichzeitig die Spule realisiert. Durch den Stromfluss erzeugt die Spule ein magnetisches Feld, welches zur Überprüfung der Echtheit des Dokuments 15 verwendet werden kann.

Alternativ ist es auch möglich, zwei Spulenwindungshälften auf das Dokument 15 aufzudrucken, wobei die Spulenwindungshälften durch eine Faltlinie voneinander getrennt sind, durch Knicken des Dokuments entlang der Faltlinie werden dann die beiden Spulenwindungshälften aufeinandergebracht, so dass eine Spule entsteht.

Bei den anhand von Figur 3, Figur 4 oder Figur 5 beschriebenen Ausführungsbeispielen der Erfindung kann wiederum eine oder mehrere analoge Schutzschichten vorgesehen sein.

Anhand der oben angegebenen Ausführungsbeispiele ist die Realisierung eines Wert- oder Sicherheitsdokuments möglich, das ein Public-Feature-Sicherheitselement beinhaltet.

Entsprechend lässt sich auch zur Realisierung von beliebigen anderen elektrischen oder elektronischen Bauelementen vorgehen, indem auf das Dokument Leiterstrukturen aufgedruckt werden, die erst durch ein bestimmtes Formen des Dokuments miteinander kontaktieren und so ein funktionelles Bauelement ergeben.

### Bezugszeichenliste

- Dokument: 1
- Energiequelle: 2
- Wandler: 3
- Leitungselement: 4
- Leitungselement: 5
- Leitungselement: 6
- Faltlinie: 7
- Endabschnitt: 8
- Leitungselement: 9
- Leitungselement: 10
- Leitungselement: 11
- Münze: 12
- Elektrolumineszierende Schicht: 13
- Schicht: 14
- Dokument: 15
- Faltlinie: 16
- Spulenwindungshälfte: 17
- Schicht: 18
- Endbereich: 19
- Schicht: 20
- Leiterbahnen: 21

## Patentansprüche

1. Wert- oder Sicherheitsdokument mit einem Sicherheitsmerkmal (3) und einer Schaltung (2, 3, 4, 5, 6; 9, 10, 11; 21), **dadurch gekennzeichnet, dass** die Schaltung eine Unterbrechung aufweist, die durch ein leitfähiges Element (8; 12; 21) schließbar ist, wobei das Sicherheitsmerkmal durch Schließen der Unterbrechung durch das leitfähige Element zur Überprüfung der Echtheit des Wert- oder Sicherheitsdokuments schaltbar ist.

2. Wert- oder Sicherheitsdokument nach Anspruch 1, wobei sich das leitfähige Element (8; 21) auf dem Dokument befindet und wobei das leitfähige Element durch Formung des Dokuments über die Unterbrechung bewegbar ist.

3. Wert- oder Sicherheitsdokument nach Anspruch 2, wobei es sich bei der Formung des Dokuments um einen Knick-, Biege-, Roll- und/oder Faltvorgang handelt.

4. Wert- oder Sicherheitsdokument nach Anspruch 3, wobei das Wert- oder Sicherheitsdokument eine vorgegebenen Knick-, Biege-, und/oder Faltlinie oder einen Knick-, Biege-, und/oder Faltbereich (7, 16) aufweist, entlang der oder des die Formung im wesentlichen erfolgt.

5. Wert- oder Sicherheitsdokument nach Anspruch 4, wobei die vorgegebene Knick-, Biege-, und/oder Faltlinie oder Knick-, Biege-, und/oder Faltbereich derart ausgebildet ist, dass die Formung im wesentlichen reversibel ist.

6. Wert- oder Sicherheitsdokument nach einem der vorhergehenden Ansprüche 1 bis 5, wobei die Unterbrechung so ausgebildet ist, dass sie durch ein externes leitfähiges Element (12) schließbar ist.

7. Wert- oder Sicherheitsdokument nach Anspruch 6, wobei es sich bei dem externen leitfähigen Element um eine Münze (12) handelt.

8. Wert- oder Sicherheitsdokument nach Anspruch 1, wobei das Sicherheitsmerkmal durch ein Bauelement zur Abgabe eines optischen und/oder akustischen und/oder elektromagnetischen Signals realisiert ist.

9. Wert- oder Sicherheitsdokument nach einem der vorhergehenden Ansprüche 1 bis 8, wobei auf mindestens einem Teilbereich der Schaltung eine Schutzschicht vorgesehen ist, wobei die Schutzschicht im Bereich der Unterbrechung eine Öffnung aufweist, so dass die Unterbrechung freiliegt.

10. Wert- oder Sicherheitsdokument nach einem der vorhergehenden Ansprüche 1 bis 9 mit einer Energiequelle, wobei es sich bei der Energiequelle vorzugsweise um eine Batterie und/oder Solarzelle und/oder eine Antenne handelt.

11. Wert- oder Sicherheitsdokument nach Anspruch 10, wobei die Unterbrechung so ausgebildet ist, dass durch Schließen der Unterbrechung mit dem leitfähigen Element das Sicherheitsmerkmal aktiviert wird.

12. Wert- oder Sicherheitsdokument nach einem der vorhergehenden Ansprüche 1 bis 11 mit einer ersten Schaltungsstruktur (19) und mit einer zweiten Schaltungsstruktur (19), die voneinander durch die Unterbrechung getrennt sind, und die durch Formung des Dokuments übereinander bringbar sind, so dass die Unterbrechung geschlossen wird.

13. Wert- oder Sicherheitsdokument nach Anspruch 12, wobei die erste Schaltungsstruktur und die zweite Schaltungsstruktur nach der Formung des Dokuments eine Spule bilden.

14. Wert- oder Sicherheitsdokument nach einem der vorhergehenden Ansprüche 1 bis 13 mit einem Träger aus Papier und/oder Kunststoff-Folie.

15. Wert- oder Sicherheitsdokument nach einem der vorhergehenden Ansprüche 1 bis 14, wobei ein oder mehrere Elemente der Schaltung, insbesondere das leitfähige Element, auf das Dokument mittels einer Druckfarbe aufgedruckt sind.

16. Verfahren zur Herstellung eines Wert- oder Sicherheitsdokuments mit folgenden Schritten:
- Zurverfügungstellung eines Trägers,
- Aufbringen einer Schaltung mit einem Sicherheitsmerkmal auf den Träger, wobei mindestens ein Teil der Elemente der Schaltung auf den Träger aufgedruckt wird und die Schaltung eine Unterbrechung aufweist und wobei die Unterbrechung derart gestaltet ist, dass sie durch ein leitfähiges Element so schließbar ist, dass durch Schließen der Unterbrechung das Sicherheitsmerkmal zur Überprüfung der Echtheit des Wert- und Sicherheitsdokumentes schaltbar ist.

17. Verfahren nach Anspruch 16, wobei in mindestens einem Teilbereich der Schaltung eine Schutzschicht aufgebracht wird, die im Bereich der Unterbrechung Öffnungen derart aufweist, daß die Unterbrechung freiliegt.

18. Verfahren nach einem der vorhergehenden Ansprüche 16 oder 17, wobei zum Aufdrucken der Schaltung eine erste Schaltungsstruktur und eine zweite Schaltungsstruktur aufgedruckt werden, die voneinander durch die Unterbrechung getrennt sind, so dass durch Formung des Dokuments die erste Schaltungsstruktur und die zweite Schaltungsstruktur übereinander bringbar sind.

19. Verfahren nach Anspruch 18, wobei es sich bei der ersten Schaltungsstruktur um eine erste Spulenwindungshälfte und bei der zweiten Schaltungsstruktur um eine zweite Spulenwindungshälfte handelt, wobei eine Schicht isolierender Druckfarbe über einen Bereich der Spulenwindungshälften aufgedruckt sind.

20. Verfahren nach Anspruch 19, wobei auf dem Bereich eine Schicht einer Druckfarbe mit einer magnetischen Eigenschaft, vorzugsweise eine Druckfarbe mit hochpermeablen Partikeln, aufgedruckt wird.

## Claims

1. A valuable or security document having a security feature (3) and a circuit (2, 3, 4, 5, 6; 10, 11; 21), **characterised in that** the circuit comprises a break that can be closed by a conductive element (8 ; 12; 21), and by closing the break by the conductive element the security feature can be switched to check the authenticity of the valuable or security document.

2. A valuable or security document according to Claim 1, wherein the conductive element (8; 21) is situated on the document and wherein the conductive element is movable across the break by forming the document.

3. A valuable or security document according to Claim 2, wherein the document-forming operation involves a flexing, bending, rolling and/or folding process.

4. A valuable or security document according to Claim 3, wherein the valuable or security document has a predetermined flexing, bending and/or folding line or a flexing, bending and/or folding region (7, 16) along which the forming operation essentially takes place.

5. A valuable or security document according to Claim 4, wherein the predetermined flexing, bending and/or folding line or flexing, bending and/or folding region is designed in such manner that the forming operation is essentially reversible.

6. A valuable or security document according to one of the preceding Claims 1 to 5,
wherein the break is designed so that it can be closed by an external conductive element (12).

7. A valuable or security document according to Claim 6, wherein the external conductive element is a coin (12).

8. A valuable or security document according to Claim 1, wherein the security feature is realised by a component designed to emit an optical and/or acoustic and/or electromagnetic signal.

9. A valuable or security document according to one of the preceding Claims 1 to 8,
wherein a protective layer is provided on at least one section of the circuit, the protective layer having an aperture in the region of the break so that the break is exposed.

10. A valuable or security document according to one of the preceding Claims 1 to 9,
having a power source, the power source preferably being a battery and/or a solar cell and/or an antenna.

11. A valuable or security document according to Claim 10, wherein the break is designed in such manner that the security feature is activated by closing the break with the conductive element.

12. A valuable or security document according to one of the preceding Claims 1 to 11,
having a first circuit configuration (19) and having a second circuit configuration (19) that are separated from one another by the break and, and that can be placed one above the other by forming the document so that the break is closed.

13. A valuable or security document according to Claim 12, wherein the first circuit configuration and the second circuit configuration form a coil after the document has been formed.

14. A valuable or security document according to one of the preceding Claims 1 to 13,
having a substrate made of paper and/or plastics film.

15. A valuable or security document according to one of the preceding Claims 1 to 14,
wherein one or more elements of the circuit, in particular the conductive element, are printed onto the document by means of a printing ink.

16. A method for manufacturing a valuable or security document, said method comprising the following steps:
- provision of a substrate,
- application of a circuit having a security feature onto the substrate, whereby at least one part of the elements of the circuit is printed onto the substrate and the circuit comprises a break and whereby the break is configured such that it can be closed by a conductive element so that by closing the break the security feature can be switched to check the authenticity of the valuable and security document.

17. A method according to Claim 16,
whereby in at least one section of the circuit there is applied a protective layer comprising apertures in the region of the break such that the break is exposed.

18. A method according to one of the preceding Claims 16 or 17,
whereby, for printing the circuit, a first circuit configuration and a second circuit configuration are printed, which are separated from one another by the break, so that by forming the document the first circuit configuration and the second circuit configuration can be placed one above the other.

19. A method according to Claim 18,
whereby the first circuit configuration is a first half of a coil winding and the second circuit configuration is a second half of a coil winding, with a layer of insulating printing ink being printed over a region of the coil winding halves.

20. A method according to Claim 19,
whereby a layer of a printing ink having a magnetic property, preferably a printing ink having highly permeable particles, is printed onto said region.

## Revendications

1. Document de valeur ou de sécurité comportant une caractéristique de sécurité (3) et un circuit (2, 3, 4, 5, 6 ; 9, 10, 11; 21), **caractérisé en ce que** le circuit présente une interruption qui peut être refermée par un élément conducteur (8 ; 12 ; 21), la caractéristique de sécurité pouvant être connectée en refermant l'interruption grâce à l'élément conducteur afin de vérifier l'authenticité du document de valeur ou de sécurité.

2. Document de valeur ou de sécurité selon la revendication 1, dans lequel l'élément conducteur (8 ; 21) se trouve sur le document, et l'élément conducteur peut être déplacé sur l'interruption par mise en forme du document.

3. Document de valeur ou de sécurité selon la revendication 2, dans lequel la mise en forme du document est obtenue par un procédé de pliure, de flexion, d'enroulement et/ou de pliage.

4. Document de valeur ou de sécurité selon la revendication 3, dans lequel le document de valeur ou de sécurité présente une ligne de pliure, de flexion et/ou de pliage prédéfinie ou une zone de pliure, de flexion et/ou de pliage (7, 16), le long de laquelle est essentiellement réalisé la mise en forme.

5. Document de valeur ou de sécurité selon la revendication 4, dans lequel la ligne de pliure, de flexion et/ou de pliage prédéfinie et/ou la zone de pliure, de flexion et/ou de pliage sont configurées de telle sorte que la mise en forme est sensiblement réversible.

6. Document de valeur ou de sécurité selon l'une des revendications 1 à 5, dans lequel l'interruption est configurée de telle sorte qu'elle peut être refermée par un élément conducteur (12) externe.

7. Document de valeur ou de sécurité selon la revendication 6, dans lequel l'élément conducteur externe est une pièce de monnaie (12).

8. Document de valeur ou de sécurité selon la revendication 1, dans lequel la caractéristique de sécurité est réalisée par un composant permettant de délivrer un signal optique et/ou acoustique et/ou électromagnétique.

9. Document de valeur ou de sécurité selon l'une des revendications 1 à 8, dans lequel une couche protectrice est prévue sur au moins une zone partielle du circuit, laquelle couche protectrice présentant une ouverture dans la zone de l'interruption, de telle sorte que l'interruption est à découvert.

10. Document de valeur ou de sécurité selon l'une des revendications précédentes 1 à 9 comportant une source d'énergie, ladite source d'énergie étant de préférence une pile et/ou une cellule solaire et/ou une antenne.

11. Document de valeur ou de sécurité selon la revendication 10, dans lequel l'interruption est configurée de telle sorte que la caractéristique de sécurité est activée lorsque l'interruption est fermée avec l'élément conducteur.

12. Document de valeur ou de sécurité selon l'une des revendications 1 à 11, comportant une première structure de connexion (19) et une deuxième structure de connexion (19) qui sont séparées l'une de l'autre par l'interruption, et qui peuvent être disposées l'une au-dessus de l'autre du fait de la mise en forme du document de telle sorte que l'interruption est refermée.

13. Document de valeur ou de sécurité selon la revendication 12, dans lequel la première structure de connexion et la deuxième structure de connexion forment une bobine après la mise en forme du document.

14. Document de valeur ou de sécurité selon l'une des revendications précédentes 1 à 13, comportant un support en papier et/ou constitué d'une pellicule de matière plastique.

15. Document de valeur ou de sécurité selon l'une des revendications précédentes 1 à 14, dans lequel un ou plusieurs éléments du circuit, en particulier l'élément conducteur, sont imprimés sur le document à l'aide d'une encre d'impression.

16. Procédé pour la fabrication d'un document de valeur ou de sécurité, comportant les étapes suivantes :
- mise à disposition d'un support,
- application sur le support d'un circuit avec une caractéristique de sécurité, au moins une partie des éléments du circuit étant imprimée sur le support et le circuit présentant une interruption, et dans lequel l'interruption est configurée de telle sorte qu'elle peut être refermée par un élément conducteur, qu'en refermant l'interruption la caractéristique de sécurité peut être connectée afin de vérifier l'authenticité du document de valeur et de sécurité.

17. Procédé selon la revendication 16, dans lequel une couche protectrice est appliquée dans au moins une zone partielle du circuit, laquelle couche présente, dans la zone de l'interruption, des ouvertures de telle sorte que l'interruption est à découvert.

18. Procédé selon l'une des revendications précédentes 16 ou 17, dans lequel, pour imprimer le circuit, on imprime une première structure de connexion et une deuxième structure de connexion, lesquelles sont séparées l'une de l'autre par l'interruption de telle sorte que, du fait de la mise en forme du document, la première structure de connexion et la deuxième structure de connexion peuvent être disposées l'une au-dessus de l'autre.

19. Procédé selon la revendication 18, dans lequel la première structure de connexion est une première moitié de spire de bobine et la deuxième structure de connexion est une deuxième moitié de spire de bobine, une couche d'encre d'impression isolante étant imprimée sur une zone des moitiés de spire de bobine.

20. Procédé selon la revendication 19 dans lequel une couche d'une encre d'impression ayant une propriété magnétique est imprimée sur la zone, de préférence une encre d'impression ayant des particules hautement perméables.
